# EUROPÄISCHE PATENTSCHRIFT

(11) **EP 0 415 873 B1**
(45) Veröffentlichungstag und Bekanntmachung des Hinweises auf die Patenterteilung: **05.05.1993**
(21) Anmeldenummer: 90810451.6
(22) Anmeldetag: 20.06.1990
(51) Int. Cl.: B23B 29/034, B28D 1/14

(54) **Hinterschnitt-Bohrvorrichtung**
Bore undercutting tool
Dispositif de perçage

(30) Priorität: 07.07.1989 DE 3922376
(43) Veröffentlichungstag der Anmeldung: 06.03.1991
(73) Patentinhaber: HILTI Aktiengesellschaft, 9494 Schaan (LI)
(72) Erfinder: Bergner, Arndt, D-8000 München 70 (DE)
(74) Vertreter: Wildi, Roland

(56) Entgegenhaltungen:
- EP-A- 0 231 720
- DE-A- 3 206 387
- DE-A- 3 809 761
- GB-A- 2 088 756

## Beschreibung

Die Erfindung betrifft eine Bohrvorrichtung zum Herstellen hinterschnittener Bohrungen in einem Untergrund, mit einem sich auf dem Untergrund abstützenden Gehäuse, in welchem eine mit einer exzentrisch angeordneten, achsparallel verlaufenden Bohrung versehene Führungshülse angeordnet ist, mit einer in der Bohrung um einen Winkel von etwa 180° begrenzt drehbar gelagerten Exzenterbüchse und einer in der Exzenterbüchse drehbar gelagerten, mit einem Antriebsgerät gekuppelten Antriebswelle mit einem Schneidkopf, wobei zwischen dem Gehäuse und der Führungshülse ein das Verdrehen der Führungshülse im Gehäuse nur in einer Drehrichtung ermöglichendes Sperrglied angeordnet ist, vgl. DE-A-3 809 761.

Hinterschnittene Bohrungen werden hauptsächlich zur Aufnahme entsprechend ausgebildeter, im Hinterschnitt formschlüssig verankerbarer Dübel hergestellt. Wegen der für die Herstellung des Hinterschnitts erforderlichen, aufwendigen Verfahren oder störungsanfälligen Vorrichtungen zur Durchführung der Verfahren konnten sich solche Dübel allerdings bis heute nicht in grossem Umfang durchsetzen.

Aus der EP-A 0 231 720 ist eine in ihrer Handhabung relativ aufwendige Bohrvorrichtung zum Herstellen hinterschnittener Bohrungen bekannt. Die Exzentrizität der Führungshülse entspricht dabei derjenigen der Exzenterbüchse. Somit ist in der einen Endstellung der Führungshülse und der Exzenterbüchse die Antriebswelle zentral in der Führungshülse angeordnet. In der anderen, um einen Winkel von 180° verdrehten Endstellung der Exzenterbüchse ist die Antriebswelle um das doppelte Mass der Exzentrizität unter Einstechen des Schneidkopfes in die Bohrlochwandung radial nach aussen gerückt. Nach dem Einstechen werden die Exzenterbüchse und die Führungshülse zusammen um einen Winkel von mindestens 360° verdreht. Dabei wird in der Bohrlochwandung ein umlaufender Hinterschnitt erzeugt. Anschliessend wird die Exzenterbüchse in der Führungshülse um 180° weiter- oder zurückgedreht,
damit die Antriebswelle wieder zentrisch in der Führungshülse angeordnet ist und die Bohrvorrichtung aus dem Bohrloch herausgezogen werden kann. Ein allfälliges Mitdrehen der Führungshülse wird dabei durch einen manuell ein- und ausrückbaren Stift verhindert. Dieser Stift wird eingerückt, wenn die Exzenterbüchse zum Einstechen und Zurückdrehen relativ zur Führungshülse verdreht werden soll und ausgerückt für das Herstellen des umlaufenden Hinterschnitts.

Aus der DE-A 38 09 761 ist eine Bohrvorrichtung bekannt, bei der zwischen dem Gehäuse und der Führungshülse ein Sperrelement vorgesehen ist, welches das Verdrehen der Führungshülse im Gehäuse in einer Drehrichtung ermöglicht. Das Sperrelement verhindert somit ein Mitdrehen der Führungshülse beim Zurückdrehen der Exzenterbüchse. Das Sperrelement verhindert jedoch nicht das Mitdrehen der Führungshülse bei dem zum Einstechen erforderlichen Verdrehen.

Der Erfindung liegt die Aufgabe zugrunde, eine Vorrichtung zum Erstellen hinterschnittener Bohrungen in einem Untergrund zu schaffen, welche eine einfache Bedienung ermöglicht und eine sichere Funktion gewährleistet.

Gemäss der Erfindung wird dies dadurch erreicht, dass am Gehäuse ein durch die Exzenterbüchse ausrückbares Rastelement für die Führungshülse vorgesehen ist, das in eingerückter Stellung eine drehschlüssige Verbindung zwischen Gehäuse und Führungshülse schafft und in ausgerückter Stellung eine Relativverdrehung zwischen Gehäuse und Führungshülse ermöglicht.

Mittels des durch die Exzenterbüchse ausrückbaren Rastelementes kann die Führungshülse gegenüber dem Gehäuse gegen Verdrehung gesichert werden. Somit wird eine Relativverdrehung zwischen der Exzenterbüchse und der Führungshülse ermöglicht. Diese Relativverdrehung ist erforderlich, um die Antriebswelle, bzw den damit verbundenen Schneidkopf von der für das Einführen des Werkzeuges in ein Bohrloch erforderlichen zentrischen Stellung in die für die Schaffung des Hinterschnitts erforderliche exzentrische Stellung zu bringen. Nach der Schaffung des Hinterschnitts muss der Schneidkopf zur Entnahme aus dem Bohrloch wieder in die zentrische Lage zurückgebracht werden. Dabei wird die Führungshülse wiederum durch das Rastelement gegen Mitdrehen gesichert. Das Ein- und Ausrücken des Rastelementes erfolgt durch die Exzenterbüchse automatisch.

An der Exzenterbüchse ist zweckmässig ein dem Ausrücken des Rastelementes dienender Betätigungsnocken vorgesehen. Beim Verdrehen der Exzenterbüchse läuft der Betätigungsnocken auf das Rastelement auf und bewirkt dabei ein Ausrücken des Rastelementes. Die Führungshülse wird dabei frei drehbar. Wird der Betätigungsnocken vom Rastelement entfernt, so kann das Rastelement wiederum einrücken und die Führungshülse gegen Verdrehung sichern.

Das Rastelement ist vorteilhaft als gegen Federkraft etwa radial verschiebbarer Riegel ausgebildet. Der Riegel wird vorzugsweise durch die Federkraft in Richtung der eingerückten Stellung beaufschlagt. Das Ausrücken des Rastelementes erfolgt somit gegen die Federkraft.

Die Erfindung soll nachstehend anhand der sie beispielsweise wiedergebenden Zeichnungen näher erläutert werden. Es zeigen:
- Fig. 1: eine erfindungsgemässe Bohrvorrichtung, im Längsschnitt;
- Fig. 2: einen Querschnitt durch die in Fig. 1 dargestellte Bohrvorrichtung entlang der Linie A-A, in Ausgangsstellung;
- Fig. 3: einen Querschnitt durch die in Fig. 1 dargestellte Bohrvorrichtung entlang der Linie B-B, in Ausgangsstellung;
- Fig. 4: einen Querschnitt durch die in Fig. 1 dargestellte Bohrvorrichtung, entlang der Linie A-A, mit um 180° verdrehter Exzenterbüchse;
- Fig. 5: einen Schnitt durch die Bohrvorrichtung gemäss Fig. 1 entlang der Linie B-B, mit um 180° verdrehter Exzenterbüchse;
- Fig. 6: einen Schnitt durch die Bohrvorrichtung gemäss Fig. 1 entlang der Linie A-A, mit verdrehter Exzenterbüchse und Führungshülse;
- Fig. 7: einen Schnitt durch die Bohrvorrichtung gemäss Fig. 1 entlang der Linie B-B, mit verdrehter Exzenterbüchse und Führungshülse.

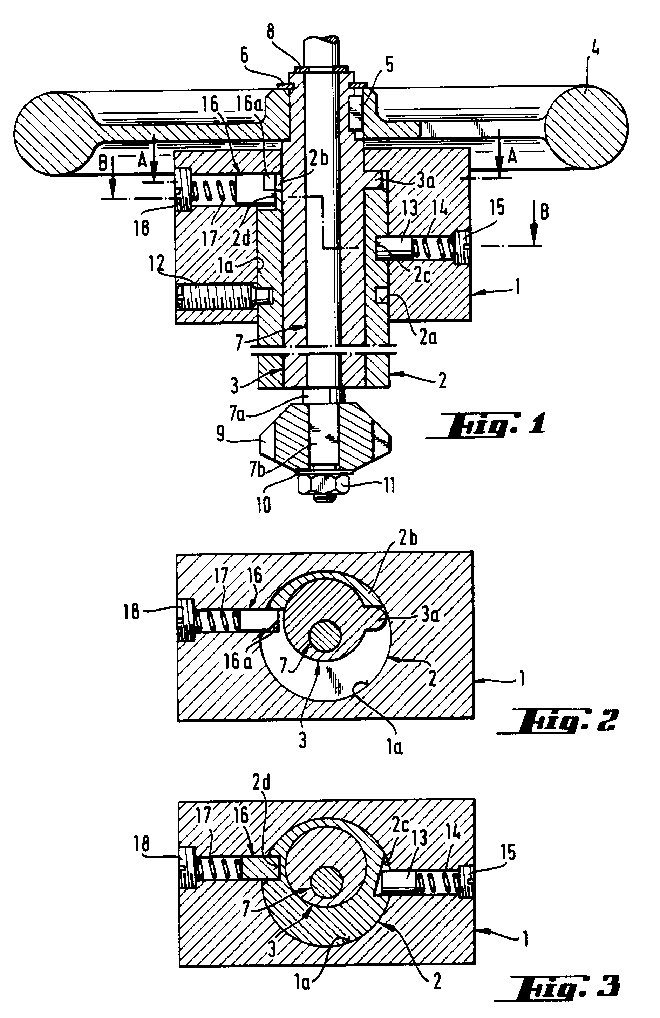

Die aus Fig. 1 bis 7 ersichtliche Bohrvorrichtung weist ein Gehäuse 1 mit einer zentralen Bohrung 1a auf. In der Bohrung 1a ist eine Führungshülse 2 drehbar gelagert. In einer exzentrisch angeordneten, achsparallel verlaufenden Bohrung der Führungshülse 2 ist eine Exzenterbüchse 3 drehbar gelagert. Die Exzenterbüchse 3 ist an ihrem aus dem Gehäuse 1 ragenden Ende mit einem Handrad 4 verbunden. Die Drehmitnahme erfolgt über einen Keil 5 und die axiale Sicherung des Handrades 4 mittels eine Sicherungsringes 6. Die Exzenterbüchse 3 ist somit über das Handrad 4 verdrehbar. In einer exzentrisch angeordneten Bohrung der Exzenterbüchse 3 ist eine Antriebswelle 7 drehbar gelagert. Die Antriebswelle 7 weist einen Bund 7a auf und ist durch einen Sicherungsring 8 gegenüber der Exzenterbüchse 3 in axialer Richtung gesichert. An ihrem unteren Ende weist die Antriebswelle 7 einen Vierkant 7b auf, der der drehschlüssigen Verbindung mit einem Schneidkopf 9 dient. Der Schneidkopf 9 ist mittels einer Unterlagsscheibe 10 und einer Sechskantmutter 11 auf der Antriebswelle 7 befestigt. Die Führungshülse 2 ist mit einer Ringnut 2a versehen, in welche ein der axialen Sicherung der Führungshülse 2 dienender Gewindestift 12 im Gehäuse 1 eingreift. Ein stiftförmiges Sperrglied 13 wird durch eine Druckfeder 14 gegen die Führungshülse 2 gedrückt. Die Druckfeder 14 stützt sich am anderen Ende an einem Verschlusspfropfen 15 ab. Auf der gegenüberliegenden Seite befindet sich ein Rastelement 16, das mittels einer Druckfeder 17 ebenfalls gegen die Führungshülse 2 gedrückt wird. Die Druckfeder 17 stützt sich an einem Verschlusspfropfen 18 ab.

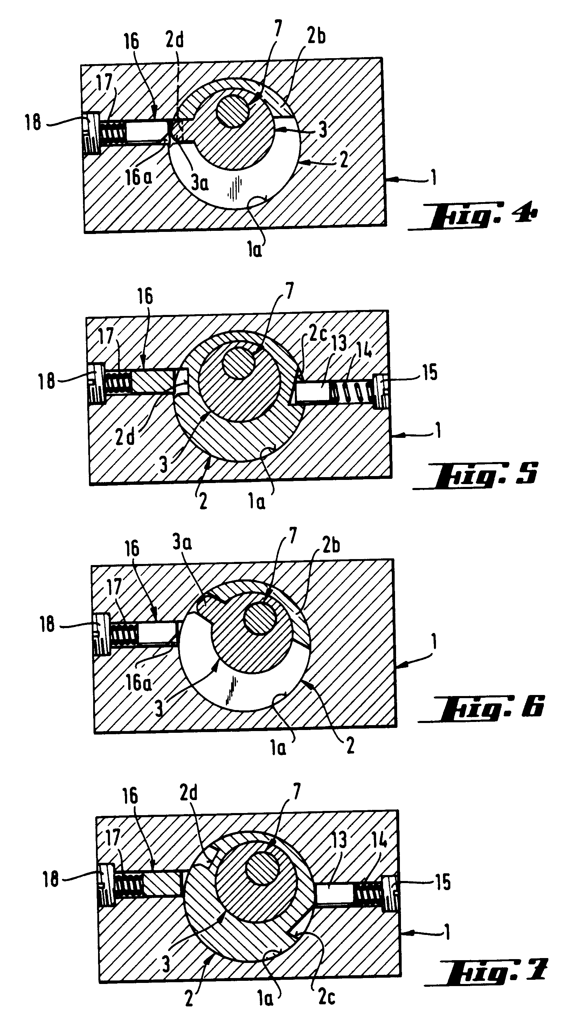

In der in Fig. 1 bis 3 dargestellten Ausgangslage heben sich die Exzentrizität der Führungshülse 2 und der Exzenterbüchse 3 auf, so dass die Antriebswelle 7 mit dem Schneidkopf 9 gegenüber der Bohrung 1a im Gehäuse 1 zentrisch angeordnet ist. In dieser Stellung greift das Sperrglied 13 in eine keilförmige Sperrnut 2c in der Führungshülse 2 ein. Das Rastelement 16 ist in eine Rastnut 2d der Führungshülse 2 eingerückt. Ein Betätigungsnocken 3a der Exzenterbüchse 3 befindet sich in dieser Stellung an der rechten Seite eines Vorsprunges 2b der Führungshülse 2 am Anschlag. In der in Fig. 2 und 3 dargestellten Stellung wird die Bohrvorrichtung in ein zuvor erstelltes Bohrloch eingeführt. Die Antriebswelle 7 ist mit einem nicht dargestellten Antriebsgerät verbunden. Nun wird die Exzenterbüchse 3 im Uhrzeigersinn verdreht. Die Führungshülse 2 wird dabei durch das in die Rastnut 2d eingreifende Rastelement 16 gegen Mitdrehen gesichert. Nach einer Verdrehung der Exzenterbüchse 3 um 180° läuft der Betätigungsnocken 3a an der Exzenterbüchse 3 an einer Anphasung 16a des Rastelementes 16 auf und bewirkt ein Ausrücken des Rastelementes 16. Die Exzentrizität der Führungshülse 2 und der Exzenterbüchse 3 addieren sich nun. Die Antriebswelle 7 hat somit ihre maximale exzentrische Stellung erreicht. Diese Situation ist in Fig. 4 und 5 dargestellt. Das Sperrglied 13 greift dabei noch immer in die Sperrnut 2c der Führungshülse 2 ein.

Durch das Ausrücken des Rastelementes 16 wird die Führungshülse 2 im Uhrzeigersinn verdrehbar. Beim Weiterdrehen der Exzenterbüchse 3 wird daher die Führungshülse 2 über den an der linken Seite des Vorsprunges 2b auflaufenden Betätigungsnocken 3a mitgenommen. Das Sperrglied 13 wird nun aus der Sperrnut 2c ausgerückt. Diese Stellung ist aus Fig. 6 und 7 ersichtlich. Beim Weiterdrehen der Exzenterbüchse 3 um wenigstens 360° wird nun durch den mit der Antriebswelle 7 verbundenen Schneidkopf 9 ein umlaufender Hinterschnitt erzeugt. Nach der Herstellung des Hinterschnitts muss zur Entnahme der Vorrichtung aus dem Bohrloch die Antriebswelle 7 wiederum gegenüber der Bohrung 1a in die zentrische Lage gebracht werden. Dies erfolgt durch anschliessendes Verdrehen der Exzenterbüchse 3 im Gegenuhrzeigersinn. Die Führungshülse 2 wird dabei mitgenommen, bis das Sperrelement 13 wiederum in die Sperrnut 2c eingreift. Anschliessend wird die Exzenterbüchse 3 relativ zur Führungshülse 2 um 180° verdreht bis der Betätigungsnocken 3a wiederum in die in Fig. 2 dargestellte Stellung gelangt. Das Rastelement 16 kann dabei in die Rastnut 2d einrasten. Die Antriebswelle 7 befindet sich nun gegenüber der Bohrung 1a wieder in zentrischer Lage. Die Bohrvorrichtung kann somit wieder aus dem Bohrloch herausgezogen werden.

## Patentansprüche

1. Bohrvorrichtung zum Herstellen hinterschnittener Bohrungen in einem Untergrund, mit einem sich auf dem Untergrund abstützenden Gehäuse (1), in welchem eine mit einer exzentrisch angeordneten, achsparallel verlaufenden Bohrung versehene Führungshülse (2) angeordnet ist, mit einer in der Bohrung um einen Winkel von etwa 180° begrenzt drehbar gelagerten Exzenterbüchse (3) und einer in der Exzenterbüchse (3) drehbar gelagerten, mit einem Antriebsgerät gekuppelten Antriebswelle (7) mit einem Schneidkopf (9), wobei zwischen dem Gehäuse (1) und der Führungshülse (2) ein das Verdrehen der Führungshülse (2) im Gehäuse (1) nur in einer Drehrichtung ermöglichendes Sperrglied (13) angeordnet ist, **dadurch gekennzeichnet**, dass am Gehäuse (1) ein durch die Exzenterbüchse (3) ausrückbares Rastelement (16) für die Führungshülse (2) vorgesehen ist, das in eingerückter Stellung eine drehschlüssige Verbindung zwischen Gehäuse (1) und Führungshülse (2) schafft und in ausgerückter Stellung eine Relativverdrehung zwischen Gehäuse (1) und Führungshülse (2) ermöglicht.

2. Bohrvorrichtung nach Anspruch 1, dadurch gekennzeichnet, dass an der Exzenterbüchse (3) ein dem Ausrücken des Rastelementes (16) dienender Betätigungsnocken (3a) vorgesehen ist.

3. Bohrvorrichtung nach Anspruch 1 oder 2, dadurch gekennzeichnet, dass das Rastelement (16) als gegen Federkraft etwa radial verschiebbarer Riegel ausgebildet ist.

## Claims

1. Drill for producing undercut bores in an underground, comprising a housing (1) which is supported against the underground and in which is arranged a guide sleeve (2) with an eccentrically arranged, axis-parallel extending bore, an eccenter bushing (3), which is mounted to be limitedly rotatable in the bore around an angle of approximately 180̸°, and a driveshaft (7) with cutter head (9), which is rotatably mounted in the eccenter bushing (3) and coupled to a drive unit, in which respect between the housing (1) and the guide sleeve (2) is arranged a locking element (13) which permits rotation of the guide sleeve (2) in the housing (1) in only one rotary direction, **characterised in that** the housing (1) is provided with a detent element (16) for the guide sleeve (2), which is disengaged by the eccenter bushing (3) and which in its engaged position provides a non-rotational connection between the housing (1) and the guide sleeve (2), and in the disengaged position a relative rotation between housing (1) and guide sleeve (2).

2. Drill according to claim 1, **characterised in that** on the eccenter bushing (3) is provided an operating cam (3a) which serves the disengagement of the detent element (16).

3. Drill according to claim 1 or 2, **characterised in that** the detent element (16) is arranged as a bolt which is displaceable approximately radially against a spring force.

## Revendications

1. Dispositif de perçage pour la réalisation de trous contre-dépouillés dans un matériau de réception, comprenant un carter (1) qui s'appuie sur le matériau de réception et dans lequel est disposée une douille de guidage (2) munie d'un alésage excentré et orienté parallèlement à l'axe, un coussinet d'excentrique (3) monté dans l'alésage de manière à pouvoir tourner d'un angle limité d'environ 180°, et un arbre moteur (7) avec une tête de coupe (9), monté de manière tournante dans le coussinet d'excentrique (3) et couplé avec un appareil d'entraînement, entre le carter (1) et la douille de guidage (2) étant disposé un organe d'arrêt (13) qui permet la rotation de la douille de guidage (2) dans le carter (1) dans seulement un sens de rotation, **caractérisé** **en ce** que sur le carter (1) est prévu un élément d'arrêt (16) pour la douille de guidage (2) qui peut être découplé par le coussinet d'excentrique (3) et qui, dans la position couplée, rend le carter (1) et la douille de guidage (2) solidaires en rotation et, dans la position découplée, permet un déplacement relatif entre le carter (1) et la douille de guidage (2).

2. Dispositif de perçage selon la revendication 1, caractérisé en ce que sur le coussinet d'excentrique (3) est prévue une came de commande (3a) pour le dégagement de l'élément d'arrêt (16).

3. Dispositif de perçage selon l'une des revendications 1 ou 2, caractérisé en ce que l'élément d'arrêt (16) est conformé en verrou déplaçable sensiblement dans le sens radial, contre la force d'un ressort.
